# EUROPEAN PATENT SPECIFICATION

(11) **EP 1 945 049 B1**
(45) Date of publication and mention of the grant of the patent: **23.09.2009**
(21) Application number: 06792437.3
(22) Date of filing: 19.10.2006
(51) Int. Cl.: A23L 2/38, A23C 11/02, A23L 1/29

(54) **PACKAGED OXIDATION-STABLE OIL-IN-WATER EMULSION**
VERPACKTE, OXIDATIONSSTABILE ÖL-IN-WASSER-EMULSION
EMULSION HUILE DANS L'EAU STABLE A L'OXYDATION ET EMBALLEE

(30) Priority: 14.11.2005 EP 05077589; 03.03.2006 EP 06075496
(43) Date of publication of application: 23.07.2008
(73) Proprietor: Unilever N.V., 3013 AL Rotterdam (NL); Unilever PLC, London EC4Y 0DY (GB)
(72) Inventor: BANKEN, Hermanus, Theodorus, K., M., NL-3133 AT Vlaardingen (NL); CASTENMILLER, Wilhelmus, Adrianus, M., NL-3133 AT Vlaardingen (NL); ROSIER, Otto, Eduard, NL-3133 AT Vlaardingen (NL)
(74) Representative: Wurfbain, Gilles L.
(86) International application number: PCT/EP2006/010134
(87) International publication number: WO 2007/054195

(56) References cited:
- WO-A-93/11675
- WO-A-20/04045309
- US-A- 5 556 662
- US-A- 6 116 448
- FRESENIUS KABI AG: "Enterale Ernährung: Fresubin(R) energy"[Online] Germany Retrieved from the Internet: URL:http://www.enterale-ernaehrung.de/inte rnet/kabi/enteral/entern.nsf/Content/Fresu bin%C2%AE+energy> [retrieved on 2008-01-04]
- PHARMA24: "Medikamente-neu 01-01-2005"[Online] January 2005 (2005-01), Retrieved from the Internet: URL:http://www.pharma24.de/med-neu-1-1-05. html> [retrieved on 2008-01-03]

## Description

### TECHNICAL FIELD OF THE INVENTION

The present invention relates to a packaged oxidation-stable oil-in-water emulsion containing from 0.1-10 wt.% of oil, said oil containing 0.3-80 g of polyunsaturated fatty acids per liter of emulsion. Another aspect of the invention concerns a method for the manufacture of such a packaged oil-in-water emulsion.

### BACKGROUND OF THE INVENTION

It is well-known in the art of food chemistry that the application of oils containing high levels of polyunsaturated fatty acids can give rise to serious off-flavour problems. These off-flavour problems are associated with the oxidation of the polyunsaturated fatty acids, leading to the formation of volatile, potent flavour molecules, such as unsaturated aldehydes. Flavour attributes associated with oxidation products of polyunsaturated fatty acids include "fish", "cardboard", "paint", "oily", "rancid" and "metallic".

It is also known that iron cations even at low concentration of e.g. 0.1 mg /kg behave as strong pro-oxidants. Hence, products containing appreciable amounts of polyunsaturated fatty acids in combination with significant concentrations of iron cations will very quickly develop a strong off-flavour.

It is further known that oxidation of polyunsaturated fatty acids may be inhibited through the addition of anti-oxidants. Examples of suitable anti-oxidants include tocopherols, extracts of rosemary, ascorbyl palmitate, citric acid, ascorbic acid, TBHQ, BHA and BHT.

The oxidation of polyunsaturated fatty acids can also be prevented by ensuring that no oxygen is present in the product in which the polyunsaturated fatty acids are incorporated. This may be achieved by producing such a product under an oxygen-free atmosphere (e.g. nitrogen) and/or by packaging the product in a package with an oxygen-free headspace or no headspace at all (e.g. Tetra Pak ®).

Production under oxygen-free atmosphere requires sophisticated equipment. Furthermore, the use of oxygen-free atmosphere does not adequately address the problem of oxidation of polyunsaturated fatty acids. Commercially available oils that are rich in polyunsaturated fatty acids always contain a certain level of oxidised polyunsaturated fatty acids in the form of peroxides. These peroxides are non-volatile and as such do not affect the flavour of a product. However, during processing and storage, these peroxides will degrade to potent flavour molecules, even in the absence of oxygen. In particular in the presence of pro-oxidants, such a iron and cupper cations, the degradation of these peroxides to aldehydes and other flavour molecules will proceed at a very high rate. Elevated storage temperatures also accelerate the degradation of these peroxides.

### SUMMARY OF THE INVENTION

The present inventors have developed a packaged oxidation-stable oil-in-water emulsion comprising an oil with a high content of polyunsaturated fatty acids in combination with a substantial amount of iron cations. The iron cations are advantageously incorporated in the present product to provide this essential mineral in an amount that represent a substantial fraction of the recommended daily amount (RDA). The present packaged emulsion offers the advantage that despite the presence of high levels of polyunsaturated fatty acids and appreciable amounts of iron cations, it does, not exhibit off-flavour defects resulting from oxidative degradation of the polyunsaturated fatty acids. As a matter of fact, the present packaged emulsion can be stored for up to several months under tropical conditions without any significant off-flavour development.

The inventors have found that oxidation of polyunsaturated fatty acids in an emulsion that additionally contains iron cations, can effectively be prevented, even if the emulsion is produced under conditions in which it is in direct contact with air, if the emulsion is packaged in a container that holds no headspace and if a very high concentration of vitamin C is incorporated in the emulsion.

### DETAILED DESCRIPTION OF THE INVENTION

Accordingly, one aspect of the invention relates to a packaged, oxidation-stable oil-in-water emulsion comprising:
- 0.1-10 wt.% of oil, said oil containing 0.3-80 g of polyunsaturated fatty acids per liter of emulsion;
- at least 20 mg/l of iron cations;
- 10-2000 mg/l of vitamin C; and
- up to 98 wt.% of water;
wherein the container comprising the emulsion holds no headspace and wherein the molar ratio of vitamin C to pro-oxidative metal cations exceeds 1:2, and wherein the emulsion contains at least 0.1 ppm of oxygen.

The terminology "packaged emulsion" as used herein refers to a combination of an emulsion and a container holding said emulsion. The container holding the present emulsion can be any container that can be filled with the present emulsion in such a way that no headspace remains in the container. A particularly preferred container is a so called Terra Pak ®.

The term "headspace" as used herein refers to the gaseous contents of a filled container. The terminology "holds no headspace" implies that the container holds essentially no headspace. Preferably, headspace represents less than 0.1 vol.%, more preferably less than 0.01 vol.% of the internal volume of the container. Most preferably, headspace represents 0 vol.% of the internal volume of the container.

The term "oil" as used herein refers to a lipid material, preferably to a lipid material that is liquid at 30°C, more preferably at 20°C. Examples of lipid materials include triglycerides, diglycerides, monoglycerides and phospholipids. Most preferably, the oil is a triglyceride oil. According to a particularly preferred embodiment, the present emulsion contain at least 0.5 wt.% of oil.

The term "polyunsaturated fatty acids" as used herein refers to C₁₂-C₂₄ fatty acids comprising two or more double bonds. The polyunsaturated fatty acids may be present in the form of free fatty acids and/or as fatty acid residues, e.g. in the form of fatty acid esters of glycerol. Preferably, the polyunsaturated fatty acids are contained in triglycerides. The concentration of polyunsaturated fatty acids in the present emulsion advantageously exceeds 0.5 g/l.

Typically, the amount of iron cations contained in the packaged emulsion does not exceed 130 mg/l. Preferably iron cations are present in a concentration that does not exceed 100 mg/l, more preferably does not exceed 60 mg/l.

The term "vitamin C" as used herein encompasses ascorbic acid as well as any edible salts or esters thereof. Preferably, the present product comprises an alkali metal salt of ascorbic acid, e.g. sodium ascorbate. The vitamin C concentration in the present emulsion preferably is at least 20 mg/l, more preferably at least 50 mg/l, even more preferably at least 100 mg/l and most preferably at least 250 mg/l. The vitamin C concentration preferably does not exceed 1800 mg/l, most preferably it does not exceed 1500 mg/l.

In order to achieve high oxidation-stability it is advisable to employ a high molar ratio of vitamin C to iron cations. Preferably, said molar ratio exceeds 1:1, more preferably it exceeds 1.5:1 and most preferably it exceeds 2:1.

The present emulsion typically contains at least 75 wt.% of water. More preferably, the present emulsion contains at least 80 wt. of water. The amount of water contained in the present emulsion preferably does not exceed 95 wt.%.

An important advantage of the present invention resides in the fact that the present emulsion can be produced without the need of using equipment that is operated under an oxygen-free atmosphere. As a result, the present emulsion, in particular shortly after manufacture, typically contains at least0.1 ppm of oxygen, preferably at least 0.2 ppm of oxygen. The amount of oxygen contained in the present emulsion preferably does not exceed 10 ppm. More preferably said amount does not exceed 5 ppm, most preferably it does not exceed 2 ppm. Due to direct contact between the emulsion components and air, not only oxygen, but also carbon dioxide and nitrogen will be introduced into the packaged emulsion. Usually, the present emulsion contains at least 0.3 mg/l of nitrogen, preferably at least 1 mg/l of nitrogen. Furthermore, the emulsion typically contains carbon dioxide and nitrogen in a weight ratio of at least 1:2500.

When the present packaged emulsion is produced in the presence of air, the oil in the packaged emulsion usually contains a significant amount of oxidised polyunsaturated fatty acids in the form of peroxides. In a preferred embodiment the present emulsion is produced in the presence air, in which case the oil present in the packaged emulsion typically has a peroxide value of at least 0.5.

Vitamin C is capable of preventing oxidative degradation in that it is oxidised even more rapidly than the polyunsaturated fatty acids and, unless it is oxidised to a very high degree, does not give rise to off-flavour development. When the present emulsion is produced without the use of an oxygen-free atmosphere, as is preferred, the oxygen present in the emulsion will oxidise a significant fraction of the vitamin C present in the emulsion. Typically, at least 5%, preferably at least 10% of the vitamin C present in the emulsion is oxidised.

The benefits of the present invention are particularly pronounced in case the emulsion contains polyunsaturated fatty acids that are extremely sensitive to oxidation. Generally speaking, sensitivity of oxidation increases exponentially with the number of double bonds present in the fatty acid. According to a particularly preferred embodiment, the polyunsaturated fatty acids contain at least three double bonds. According to an even more preferred embodiment, the present emulsion contains at least 10 mg/l, preferably at least 50 mg/l of ω-3 fatty acids, especially of ω-3 fatty acids selected from the group consisting of DHA (docosahexaenoic acid), EPA (eicosapentaenoic acid) and combinations thereof. Usually, the combined amount of DHA and EPA contained in the present emulsions does not exceed 3 g/l, preferably it does not exceed 1 g/l.

The present product may advantageously be used to provide an optimised balance of important nutrients. Accordingly, the present emulsion preferably contains
- 0.5-8 wt.% protein;
- 1-6 wt.% oil;
- 6-20 wt.% carbohydrates;
- up to 5 wt.% of optional other nutritional components. Examples of other nutritional components that may advantageously be incorporated include: vitamins, phytosterols, polyphenols, flavonoids, carotenoids etc.

The present emulsion preferably is a pourable liquid. Even more preferably, the emulsion is a thin liquid as evidenced by a viscosity in the range of 5-200 mPa.s at 10 s⁻¹, preferably in the range of 5-100 mPa.s at 10 s⁻¹. The viscosity of the emulsion is suitably determined by means of a Rheometer ®AR1000, using a shear rate sweep from 0.01 to 250 s⁻¹ (in 510 s.) and a cone plate measuring system with a cone angle 2:0:38 (deg:min:sec), a cone diameter of 40 mm and a truncation of 54 microns. Preferably, the viscosity is measured at a temperature of 20 °C.

The oil comprised in the present emulsion preferably contains at least 50 wt.%, more preferably at least 80 wt.% of a highly unsaturated oil selected from the group consisting of marine oil (e.g. fish oil or algae oil), rapeseed oil, olive oil, soybean oil, sunflower oil, linseed oil, cashew nut oil, walnut oil, peanut oil canola oil and combinations thereof. According to a particularly preferred embodiment, the present emulsion contains at least 0.01 wt.% of marine oil.

In order to ensure that the present emulsion is sufficiently stable against syneresis, flocculation and creaming, it is preferred that the oil is present as dispersed droplets with a diameter D_{3,2} of 0.1-3 µm, preferably of 0.3-2 µm. The D_{3,2} diameter (i.e. the surface weighted average diameter) is suitably determined by means of laser diffraction, using a Helos ^{™} laser diffraction sensor (ex Sympatec GmbH) in combination with a 632.8 nm laser. Measurements are conducted at 20 °C using a QUIXEL ™ wet dispenser ex Sympatec GmbH (at an optical concentration between 10 and 20%).

In accordance with another preferred embodiment the present emulsion contains between 0.1 and 15 wt.%, more preferably between 1 and 10 wt.% of a starch component selected from the group consisting of native starches, modified starches and combinations thereof. The incorporation of a starch component offers the advantage that it stabilises the emulsion and at the same time provides a digestible carbohydrate.

The present packaged emulsion does not oxidise significantly even when exposed to extreme storage conditions, such as several weeks at 40°C. According to a particularly preferred embodiment, the packaged emulsion can be stored for more than 8 weeks, even more preferably for at least 15 weeks at a temperature of 40°C without developing an unacceptable off-flavour.

In order to guarantee adequate storage stability the present emulsion preferably is a sterile emulsion. The pH of the emulsion preferably is within the range of 4-8. More preferably, the emulsion has a pH between 5 and 7.5, mot preferably between 6.5 and 7.

The oxidation stability of the present packaged emulsion is achieved without the need of using highly effective anti-oxidants such as BHA, BHT and TBHQ. Accordingly, in a preferred embodiment the emulsion does not contain an anti-oxidant selected from the group consisting of BHA, BHT and TBHQ.

Yet another aspect of the present invention relates to a method of preparing a packaged emulsion as defined herein before, said method comprising:
- combining oil, iron cation, vitamin C and water in a pre-emulsion;
- homogenising the pre-emulsion;
- sterilising the homogenised emulsion; and
- packaging the sterilised emulsion in a container that holds no headspace;
wherein the pre-emulsion contains at least 0.1 ppm of oxygen.

The invention is further illustrated by means of the following examples.

### EXAMPLE 1

29.9 kg of water was weighed and heated to 80°C in an open vessel. 2.88 kg of skimmed milk powder was pre-mixed with 0.1 kg of potassium phosphate and 40 g of mono/di-glycerides (HV-52 K Danisco). This mixture was dispersed in the hot water under high speed mixing and hydrated under proper mixing for 15 minutes. An oil blend containing 0.95% DHA was produced using Soybean oil and a DHA concentrate based on Algae oil ex Nutrinova in a ratio of 97.8:2.2%. 1.06 kg of this oil mixture was added under high speed mixing and pre-emulsified by proper mixing for 15 minutes. 3.76 kg of maltodextrin DE20 and 0.2 kg of native starch was dispersed in this pre-emulsion

Vitamins/minerals and colouring ingredients (e.g. caramel) were mixed to a blend containing 5 g of Fe-fumarate and 37.2 g of vitamin C (As sodium ascorbate). This blend was added to the pre-emulsion. Next, 1.6 kg of sugar was added to the pre-emulsion. Flavours were added to the pre-emulsion at the desired level. The pH was checked and corrected whenever it was below < 6.7 using phosphate buffer. Final concentration of vitamin C equals 930 mg/kg and final concentration of 43 mg/kg Fe²⁺.

The product was homogenised at 175 - 250 bar and 65-70°C and thereafter UHT treated at 140°C - 4 sec. Thereafter the product was cooled to 25-30°C and filled aseptically in aluminum bags without headspace.

The products were stored at 40°C and evaluated on taste. Below the taste evaluation results by an expert panel are presented (average over n=5)

| Time (Storage temperature) | Taste score (0-10) |
|---|---|
| 1 day (7 °C) | 6.3 |
| 4 weeks (40 °C) | 6.9 |
| 2 months (40 °C) | 6.5 |
| 3 months (40 °C) | 6.6 |

After 2 months the vitamin C level analysed was 554 mg/kg. These results demonstrate that the packaged emulsion was extremely oxidation stable as it did not develop significant off-flavour during prolonged storage under extreme conditions even though the product contained an appreciable amount of highly unstable polyunsaturated fatty acids. The observed reduction in vitamin C content indicates that vitamin C was preferentially oxidised during storage.

## Claims

1. A packaged, oxidation-stable oil-in-water emulsion comprising:
• 0.1-10 wt.% of oil, said oil containing 0.3-80 g of polyunsaturated fatty acids per liter of emulsion;
• at least 20 mg/l of iron cations;
• 10-2000 mg/l of vitamin C; and
• up to 98 wt.% of water;
wherein the container comprising the emulsion holds no headspace and wherein the molar ratio of vitamin C to iron cations exceeds 1:2, preferably exceeds 1:1, and wherein the emulsion contains at least 0.1 ppm of oxygen.

2. Packaged emulsion according to claim 1, wherein the oil has a peroxide value of at least 0.2.

3. Packaged emulsion according to claim 1 or 2, wherein the emulsion contains at least 0.3 mg/l nitrogen and contains carbon dioxide and nitrogen in a weight ratio of at least 1:2500.

4. Packaged emulsion according to any one of the preceding claims, wherein at least 5% of the vitamin C is oxidised.

5. Packaged emulsion according to any one of the preceding claims, wherein the polyunsaturated fatty acids contain at least three double bonds.

6. Packaged emulsion according to any one of the preceding claims, wherein the emulsion contains at least 10 mg/l, preferably at least, 50 mg/l of polyunsaturated fatty acids selected from the group consisting of docosahexenoic acid (DHA), eicosapentenoic acid (EPA) and combinations thereof.

7. Packaged emulsion according to any one of the preceding claims, wherein the emulsion contains
• 0.5-8 wt.% protein;
• 1-6 wt.% oil;
• 6-20 wt.% carbohydrates;
• up to 5 wt.% of optional other nutritional components.

8. Packaged emulsion according to any one of the preceding claims, said emulsion having a viscosity in the range of 5-200 mPa.s at 10 s⁻¹.

9. Packaged emulsion according to any one of the preceding claims, wherein the oil contains at least 50 wt.% of highly unsaturated oil selected from the group consisting of marine oil, rapeseed oil, olive oil, soybean oil, sunflower oil, linseed oil, cashew nut oil, walnut oil, peanut oil canola oil and combinations thereof.

10. Packaged emulsion according to any one of the preceding claims, wherein the oil is present as dispersed droplets with a diameter D_{3,2} of 0.1-3 µm, preferably of 0.3-2 µm.

11. Packaged emulsion according to any one of the preceding claims, wherein the emulsion contains between 0.1 and 15 wt.% of a starch component selected from the group consisting of native starches, modified starches and combinations thereof.

12. Packaged emulsion according to any one of the preceding claims, wherein the emulsion does not contain an anti-oxidant selected from the group consisting of BHA, BHT and TBHQ.

13. A method of preparing a packaged emulsion according to any one of the preceding claims, comprising:
• combining oil, pro-oxidative metal cation, vitamin C and water in a pre-emulsion;
• homogenising the pre-emulsion;
• sterilising the homogenised emulsion; and
• packaging the sterilised emulsion in a container that holds no headspace;
wherein the pre-emulsion contains at least 0.1 ppm of oxygen.

## Patentansprüche

1. Verpackte, oxidationsstabile Öl-in-Wasser-Emulsion, umfassend:
• 0,1-10 Gewichts-% Öl, wobei das Öl 0,3-80 g mehrfach ungesättigte Fettsäuren pro Liter Emulsion enthält;
• wenigstens 20 mg/l Eisenkationen;
• 10-2000 mg/l Vitamin C und
• bis zu 98 Gewichts-% Wasser;
wobei der Behälter, der die Emulsion umfasst, keinen Kopfraum hält und wobei das Molverhältnis von Vitamin C zu Eisenkationen 1:2 übersteigt, vorzugsweise 1:1 übersteigt, und
wobei die Emulsion wenigstens 0,1 ppm Sauerstoff enthält.

2. Verpackte Emulsion gemäß Anspruch 1, wobei das Öl einen Peroxid-Wert von wenigstens 0,2 hat.

3. Verpackte Emulsion gemäß Anspruch 1 oder 2, wobei die Emulsion wenigstens 0,3 mg/l Stickstoff enthält und Kohlendioxid und Stickstoff in einem Gewichtsverhältnis von wenigstens 1:2500 enthält.

4. Verpackte Emulsion gemäß einem der vorangehenden Ansprüche, wobei wenigstens 5 % des Vitamin C oxidiert sind.

5. Verpackte Emulsion gemäß einem der vorangehenden Ansprüche, wobei die mehrfach ungesättigten Fettsäuren wenigstens drei Doppelbindungen enthalten.

6. Verpackte Emulsion gemäß einem der vorangehenden Ansprüche, wobei die Emulsion wenigstens 10 mg/l, vorzugsweise wenigstens 50 mg/l, mehrfach ungesättigte Fettsäuren, ausgewählt aus der Gruppe, bestehend aus Docosahexensäure (DHA), Eicosapentensäure (EPA) und Kombinationen davon, enthält.

7. Verpackte Emulsion gemäß einem der vorangehenden Ansprüche, wobei die Emulsion enthält:
• 0,5-8 Gewichts-% Protein;
• 1-6 Gewichts-% Öl;
• 6-20 Gewichts-% Kohlenhydrate;
• bis zu 5 Gewichts-% optionale andere nutritionale Komponenten.

8. Verpackte Emulsion gemäß einem der vorangehenden Ansprüche, wobei die Emulsion eine Viskosität im Bereich von 5-200 mPa.x bei 10 s⁻¹ hat.

9. Verpackte Emulsion gemäß einem der vorangehenden Ansprüche, wobei das Öl wenigstens 50 Gewichts-% hoch ungesättigtes Öl enthält, das ausgewählt ist aus der Gruppe, bestehend aus marinem Öl, Rapssamenöl, Olivenöl, Sojabohnenöl, Sonnenblumenöl, Leinöl, Cashew-Nussöl, Walsnussöl, Erdnussöl, Canolaöl und Kombinationen davon.

10. Verpackte Emulsion gemäß einem der vorangehenden Ansprüche, wobei das Öl als dispergierte Tröpfchen mit einem Durchmesser D_{3,2} von 0,1-3 µm, vorzugsweise von 0,3-2 µm, vorliegt.

11. Verpackte Emulsion gemäß einem der vorangehenden Ansprüche, wobei die Emulsion zwischen 0,1 und 15 Gewichts-% einer Stärkekomponente enthält, die ausgewählt ist aus der Gruppe, bestehend aus nativen Stärken, modifizierten Stärken und Kombinationen davon.

12. Verpackte Emulsion gemäß einem der vorangehenden Ansprüche, wobei die Emulsion kein Antioxidans, ausgewählt aus der Gruppe, bestehend aus BHA, BHT und TBHQ, enthält.

13. Verfahren zur Herstellung einer verpackten Emulsion gemäß einem der vorangehenden Ansprüche, umfassend:
• Kombinieren von Öl, pro-oxidativem Metallkation, Vitamin C und Wasser in einer Voremulsion;
• Homogenisieren der Voremulsion;
• Sterilisieren der homogenisierten Emulsion und
• Verpacken der sterilisierten Emulsion in einem Behälter, der keinen Kopfraum hält;
wobei die Voremulsion wenigstens 0,1 ppm Sauerstoff enthält.

## Revendications

1. Émulsion huile dans l'eau stable à l'oxydation et emballée, comprenant :
■ 0,1 à 10 % en poids d'huile, ladite huile contenant 0,3 à 80 g d'acides gras polyinsaturés par litre d'émulsion ;
■ au moins 20 mg/l de cations de fer ;
■ 10 à 2000 mg/l de vitamine C ; et
■ jusqu'à 98 % en poids d'eau ;
dans laquelle le récipient comprenant l'émulsion ne comporte pas d'espace de tête et dans laquelle le rapport molaire entre la vitamine C et les cations de fer dépasse 1 : 2, de préférence dépasse 1 : 1,
et dans laquelle l'émulsion contient au moins 0,1 ppm d'oxygène.

2. Émulsion emballée selon la revendication 1, dans laquelle l'huile présente un indice de peroxyde d'au moins 0,2.

3. Émulsion emballée selon la revendication 1 ou 2, dans laquelle l'émulsion contient au moins 0,3 mg/ l d'azote et contient du dioxyde de carbone et de l'azote en un rapport en poids d'au moins 1 : 2500.

4. Émulsion emballée selon l'une quelconque des revendications précédentes, dans laquelle au moins 5 % de la vitamine C sont oxydés.

5. Émulsion emballée selon l'une quelconque des revendications précédentes, dans laquelle les acides gras polyinsaturés contiennent au moins trois doubles liaisons.

6. Émulsion emballée selon l'une quelconque des revendications précédentes, dans laquelle l'émulsion contient au moins 10 mg/l, de préférence au moins 50 mg/l d'acides gras polyinsaturés choisis dans le groupe constitué par l'acide docosahexènoique (DHA), l'acide éicosapentènoïque (EPA) et leurs combinaisons.

7. Émulsion emballée selon l'une quelconque des revendications précédentes, dans laquelle l'émulsion contient :
■ 0,5 à 8 % en poids de protéines ;
■ 1 à 6 % en poids d'huile ;
■ 6 à 20 % en poids de glucides ;
■ jusqu'à 5 % en poids d'autres composants nutritionnels facultatifs.

8. Émulsion emballée selon l'une quelconque des revendications précédentes, ladite émulsion ayant une viscosité dans la plage allant de 5 à 200 mPa.s à 10 s⁻¹.

9. Émulsion emballée selon l'une quelconque des revendications précédentes, dans laquelle l'huile contient au moins 50 % en poids d'une huile hautement insaturée choisie dans le groupe constitué par une huile de poisson, l'huile de colza, l'huile d'olive, l'huile de soja, l'huile de tournesol, l'huile de lin, l'huile de noix de cajou, l'huile de noix, l'huile d'arachide, l'huile de canola et leurs combinaisons.

10. Émulsion emballée selon l'une quelconque des revendications précédentes, dans laquelle l'huile est présente sous la forme de gouttelettes dispersées ayant un diamètre D_{3,2} de 0, 1 à 3 µm, de préférence de 0,3 à 2 µm.

11. Émulsion emballée selon l'une quelconque des revendications précédentes, dans laquelle l'émulsion contient entre 0,1 et 15 % en poids d'un composant d'amidon choisi dans le groupe constitué par les amidons natifs, les amidons modifiés et leurs combinaisons.

12. Émulsion emballée selon l'une quelconque des revendications précédentes, dans laquelle l'émulsion ne contient pas un antioxydant choisi dans le groupe constitué par le BHA, le BHT et le TBHQ.

13. Méthode de préparation d'une émulsion emballée selon l'une quelconque des revendications précédentes, comprenant :
■ la combinaison d'une huile, d'un cation de métal pro-oxydatif, de vitamine C et d'eau dans une pré-émulsion ;
■ l'homogénéisation de la pré-émulsion ;
■ la stérilisation de l'émulsion homogénéisée ; et
■ le conditionnement de l'émulsion stérilisée dans un récipient qui ne comporte pas d'espace de tête ;
dans laquelle la pré-émulsion contient au moins 0,1 ppm d'oxygène.
